# EUROPEAN PATENT APPLICATION

(11) **EP 2 562 753 A2**
(43) Date of publication of application: **27.02.2013**
(21) Application number: 12179791.4
(22) Date of filing: 09.08.2012
(51) Int. Cl.: G10L 21/0264

(54) **Method of removing microphone noise and portable terminal supporting the same**

(30) Priority: 25.08.2011 KR 20110085165
(71) Applicant: Samsung Electronics Co., Ltd., Suwon-si, Gyeonggi-do, 443-742 (KR)
(72) Inventor: Yoo, Chul, 443-742 Gyeonggi-do (KR)
(74) Representative: Jenkins, Richard Gavin

(57) **Abstract**

A method of removing a microphone noise and a portable terminal supporting the same are provided. The portable terminal supporting removal of a microphone noise includes a microphone for collecting an audio signal, a controller for processing the audio signal collected by the microphone, a microphone signal line for transferring a microphone signal collected by the microphone to the controller, and a noise collecting circuit disposed at a neighboring region of the microphone signal line for collecting and providing a noise signal similar to a noise induced in the microphone signal line to the controller, wherein the controller controls such that the noise induced in the microphone signal line is removed based on the noise signal collected by the noise collecting circuit.

## Description

### BACKGROUND OF THE INVENTION

### 1. Field of the Invention:

The present invention relates to a microphone function. More particularly, the present invention relates to a method of providing a high quality audio signal and a portable terminal supporting the same.

### 2. Description of the Related Art:

A portable terminal has various functions such as a video calling function, an electronic organizer function, a document function, an e-mail function, and an Internet function, as well as simple voice calling and Short Messaging Service (SMS) transmission functions, through rapid technology development. The portable terminal fundamentally supports a voice collecting function, an audio output function, and a screen display function to support a call function.

A portable terminal of the related art includes a communication module for supporting a call function, and performs signal transmission/reception based on a constant frequency band in which the communication module is operated. However, the signal transmission/reception operation of the constant frequency band in which the communication module is operated may have an electronic influence upon other components. More particularly, a frequency of the constant band influences a microphone. That is, the portable terminal of the related art has a problem in that a frequency signal of the constant band interferes with a microphone signal during a call function operation. As a result, as a frequency signal of the constant band is induced in a signal collected by a microphone in the form of noise, the quality of an audio signal is reduced to a value less than or equal to a reference value. Thus, a user of a portable terminal of the related art has difficulty in performing a voice call due to deterioration in call quality.

Therefore, a need exists for an apparatus and method for removing a noise included in a microphone signal.

### SUMMARY OF THE INVENTION

Aspects of the present invention are to address at least the abovementioned problems and/or disadvantages and to provide at least the advantages described below. Accordingly, an aspect of the present invention is to provide a method of removing a noise included in a microphone signal, and a portable terminal supporting the same.

Another aspect of the present invention is to provide a method of removing a microphone noise that may improve call quality through removal of a noise included in a microphone signal, and a portable terminal supporting the same.

In accordance with an aspect of the present invention, a portable terminal supporting removal of a microphone noise is provided. The portable terminal includes a microphone for collecting an audio signal, a controller for processing the audio signal collected by the microphone, a microphone signal line for transferring a microphone signal collected by the microphone to the controller, and a noise collecting circuit disposed at a neighboring region of the microphone signal line for collecting and providing a noise signal similar to a noise induced in the microphone signal line to the controller, wherein the controller controls such that the noise induced in the microphone signal line is removed based on the noise signal collected by the noise collecting circuit.

In accordance with another aspect of the present invention, a method of removing a microphone noise is provided. The method includes collecting a microphone signal through a microphone signal line connected to a microphone, collecting a noise signal induced in a noise collecting circuit disposed at a neighboring region of a microphone signal line provided between the microphone and a controller, generating a compensation signal for removing a noise included in the microphone signal using the noise signal, and removing the noise included in the microphone signal with the compensation signal.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a flowchart illustrating a method of removing a microphone noise according to an exemplary embodiment of the present invention;

FIG. 2 is a block diagram illustrating a configuration of a portable terminal according to an exemplary embodiment of the present invention;

FIG. 3 is a block diagram illustrating a configuration of a controller according to a first exemplary embodiment of the present invention;

FIG. 4 is a block diagram illustrating a configuration of a controller for removing a microphone noise according to an exemplary embodiment of the present invention;

FIG. 5 is a block diagram illustrating a configuration of a controller according to a second exemplary embodiment of the present invention;

FIG. 6 is a graph illustrating a result of measuring a noise induced in a noise collecting circuit according to an exemplary embodiment of the present invention;

FIG. 7 is a graph illustrating a result of measuring a noise induced in a microphone signal line according to an exemplary embodiment of the present invention;

FIG. 8 is a waveform diagram of a recording of a noise induced in a noise collecting circuit according to an exemplary embodiment of the present invention;

FIG. 9 is a waveform diagram of a recording of a noise induced in a microphone signal line according to an exemplary embodiment of the present invention;

FIG. 10 is a view illustrating a result of normalizing a recorded noise associated with a noise collecting circuit according to an exemplary embodiment of the present invention;

FIG. 11 is a view illustrating a result of normalizing a recorded noise associated with a microphone signal line according to an exemplary embodiment of the present invention;

FIG. 12 is a waveform diagram illustrating a scaling signal for generating a compensation signal according to an exemplary embodiment of the present invention;

FIG. 13 is a waveform diagram illustrating an inverted signal of a scaling signal for generating a compensation signal according to an exemplary embodiment of the present invention;

FIG. 14 is a view illustrating noise removal through a sum of a microphone signal and a compensation signal according to an exemplary embodiment of the present invention; and

FIG. 15 is a spectrum analysis result of a signal from which a noise is removed and an original signal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

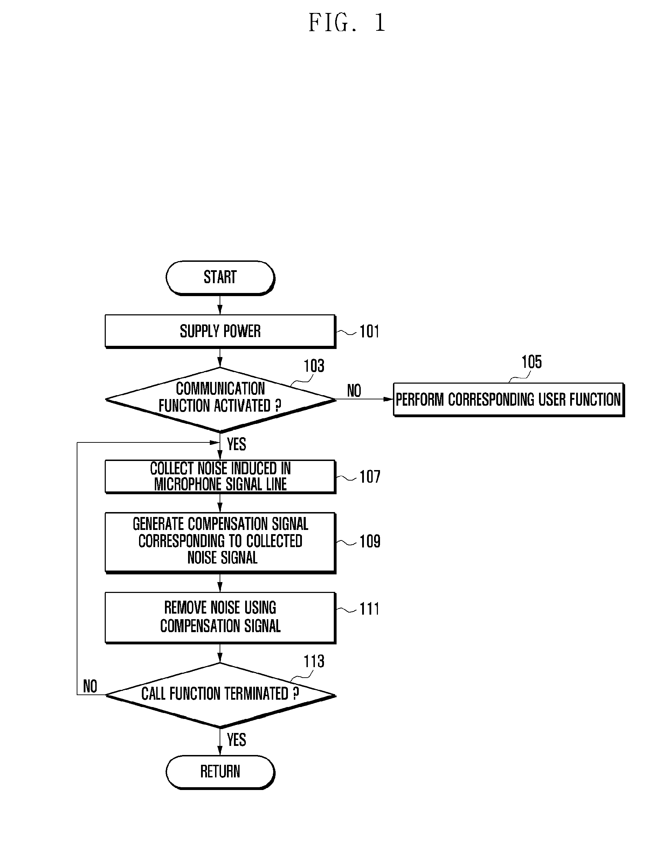

FIG. 1 is a flowchart illustrating a method of removing a microphone noise according to an exemplary embodiment of the present invention.

Referring to FIG. 1, a controller of a portable terminal controls power provided to respective constructions of the portable terminal using power supplied from a power supply and supports an operation of respective constructions of the portable terminal based on the supplied power at step 101.

The controller may determine whether a signal for activating a communication function is generated at step 103. When the signal for activating a communication function is not generated, the controller may perform a user function corresponding to an input signal at step 105. For example, the controller may support a file search function, a file playing function, a broadcasting reception function, a message creation function corresponding to the input signal, and the like.

Conversely, when the signal for activating the communication function is generated at step 103, the controller may activate and control a Radio Frequency (RF) communication unit to form a communication channel for supporting a call function with another terminal. Here, the RF communication unit may be configured by a communication module of a Time Division Multiple Access (TDMA) scheme. In the case of a TDMA scheme, a voltage drop occurs during transmission of a signal with a period of a constant frequency, for example, 217MHz. Such a voltage drop may act as a noise in an internal circuit of a portable terminal neighboring the RF communication unit. More particularly, when a microphone signal line is located adjacent to a power line, the voltage drop acts as a significant noise. As a result, when a communication module of a TDMA scheme is activated to transmit signals, a radiated signal influences a ground terminal of an adjacent micro signal line or a signal line itself to cause interference. Interference by the TDMA communication module may differently occur for each transmitted/received frequency band, for each arranged location of a signal line of a microphone, and according to a signal transmission level. In the meantime, when a communication channel is formed, the controller may control in such a manner that a microphone is activated to collect an audio signal and a speaker is activated to output a received audio signal.

The controller collects a noise induced in a microphone signal line at step 107. To do this, the portable terminal includes a noise collecting circuit at an adjacent region of a microphone signal line connected between a microphone and a controller. The noise collecting circuit is disposed at a region adjacent to a microphone signal line, and collects a noise similar to the noise induced in the microphone signal line. Accordingly, the controller may collect a noise identical with or similar to a noise induced in a microphone signal line through the noise collecting circuit.

The controller may control to generate a compensation signal corresponding to the collected noise signal at step 109. For example, the controller may generate a compensation signal whose phase is opposite to that of the collected noise or a compensation signal whose phase is opposite to that of the collected noise and having scaling similar to that thereof. The controller may generate a compensation signal of a predetermined pattern capable of removing the collected noise signal. When the compensation signal is generated, the controller may remove a noise using the generated compensation signal at step 111. For example, the controller may combine the compensation signal having an inverted phase with a noise to remove the noise. To do this, the controller may include a compensator for generating a compensation signal having a phase inverted to that of the collected noise signal and combining it with the noise. The controller may remove a part of the noise using a compensation signal of a predetermined pattern. To do this, the controller may include a signal processor generating a compensation signal or a compensation pattern for removing the noise signal to perform signal processing for removing the noise signal. In the meantime, the controller may control such that a microphone signal from which a noise is removed is processed and the processed microphone signal is transmitted to another portable terminal through the RF communication unit.

The controller determines whether a signal for terminating a call function is generated at step 113. When a terminating signal is not generated, the process returns to step 107, and the foregoing procedure may be repeated. Alternatively, if a terminating signal is generated, the controller returns to a normal function. Through the foregoing repeated procedures, the controller may generate a compensation signal corresponding to a noise induced in a microphone in real time, and suitably remove the noise using the generated compensation signal. Alternatively, if it is determined that a terminating signal is generated at step 113, the controller returns to a stand-by or other function.

As illustrated above, an exemplary method for removing a microphone noise by efficiently removing a microphone noise occurring during an operation of an RF communication unit may improve the sound quality of the portable terminal.

The foregoing exemplary embodiment has illustrated a method for removing a microphone noise. Hereinafter, an exemplary configuration of a portable terminal for removing microphone noise will be described with reference to the accompanying drawings.

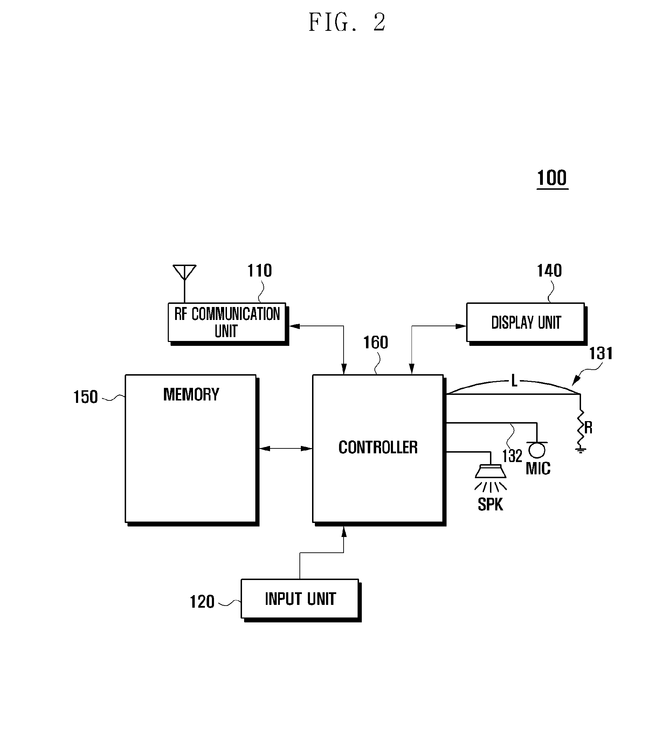

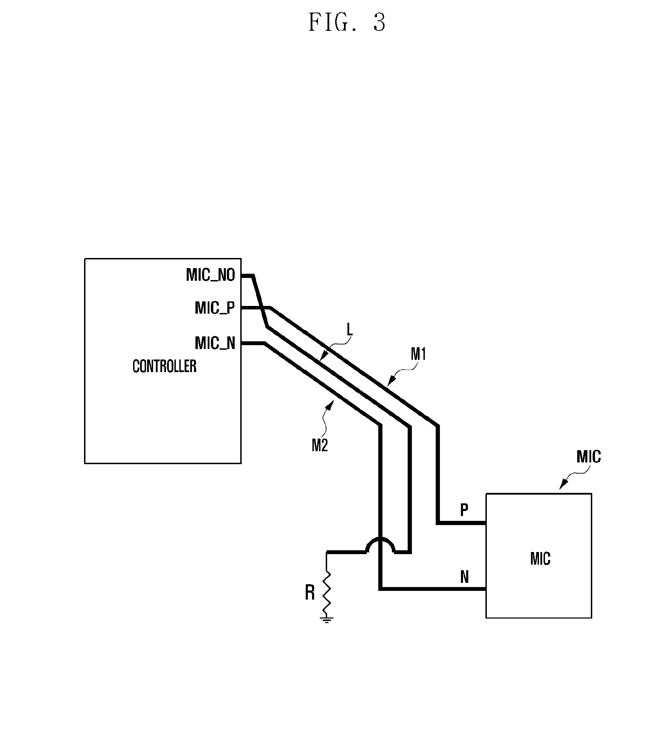

FIG. 2 is a block diagram illustrating a configuration of a portable terminal according to an exemplary embodiment of the present invention. FIG. 3 is a block diagram illustrating a configuration of a controller according to a first exemplary embodiment of the present invention.

Referring to FIG. 2, the portable terminal 100 may include an RF communication unit 110, an input unit 120, a microphone MIC, a speaker SPK, a noise collecting circuit 131, a display unit 140, a memory 150, and a controller 160.

The portable terminal 100 collects a noise similar to or identical with a noise induced in the microphone using the noise collecting circuit 131 provided at a region neighboring the microphone, and generates a compensation signal corresponding to the collected noise. The portable terminal 100 may eliminate a noise induced in the microphone using the generated compensation signal, process the audio signal from which the noise is removed, and transmit the processed audio signal to another terminal through the RF communication unit 110. Accordingly, the portable terminal 100 may efficiently remove the noise induced in the microphone occurring according to an operation of the RF communication unit 110 to improve audio quality. Hereinafter, an exemplary operation in a microphone noise removal procedure and a basic operation of the present invention by respective structural elements of the portable terminal will be described.

The RF communication unit 110 forms a communication channel with another terminal through a network device. The RF communication unit 110 may be configured with a communication module according to at least one of various communication schemes to form a communication channel with a network device. For example, the RF communication unit 110 may be configured by at least one of various communication modules that support various communication schemes such as Wideband Code Division Multiple Access (WCDMA) and Orthogonal Frequency Division Multiple Access (OFDMA) schemes as well as a communication module supporting a communication scheme such as Code Division Multiple Access (CDMA) and Global System for Mobile communications (GSM). More particularly, the RF communication unit 110 may be configured by a communication module supporting a Time Division Multiple Access (TDMA) communication scheme. When a communication function is activated, the RF communication unit 110 may be activated, form a communication channel with another terminal, transmit an audio signal collected by the microphone to another terminal, and transfer an audio signal provided from the other terminal to the controller 160. More particularly, when the RF communication unit 110 is activated to support a call function, the microphone and the speaker may be automatically activated.

The input unit 120 may generate an input signal for activating the RF communication unit 110, an input signal for setting a microphone noise elimination mode, and an input signal for terminating a function based on the RF communication unit 110 according to the user request. The input unit 120 may generate and transfer the foregoing input signal to the controller 160 according to the control of the user. Here, when the portable terminal 100 is manufactured with a full touch screen, the input unit 120 may be configured by side keys or separate hot keys, or be substituted by key maps displayed on a touch screen of the portable terminal 100. The input unit 120 may include a plurality of input keys and function keys for receiving input of numerals or character information and for setting various functions. The function keys may include arrow keys, side keys, and hot keys set such that a certain function is performed.

The speaker outputs various audio signals generated during a function operation procedure of the portable terminal 100. When the RF communication unit 110 is activated to support a call function, the speaker may output transmitted/received audio signals.

The microphone may be activated according to a request for an audio signal collecting function of the portable terminal 100, may collect peripheral audio signals, and may transfer collected audio signals to the controller 160. More particularly, when the RF communication unit 110 is activated, the microphone may be activated to collect a voice signal of a user under the control of the controller 160. The microphone may be manufactured as a module and be disposed at the portable terminal 100. Further, so as to operate the disposed microphone, a microphone signal line 132 is provided between the microphone and the controller 160. The microphone signal line 132 connects the microphone to the controller 160, and may be changed in the length, the thickness, and a disposed location according to a design form of the portable terminal 100 or a design intention of a designer. The microphone signal line 132 may be provided in the form as illustrated in FIG. 3. If the microphone, having a positive electrode terminal P and a negative electrode terminal N, is disposed at a side of the portable terminal 100, a first microphone input terminal MIC_P and a second microphone input terminal MIC_N of the controller 160, the P electrode terminal P, and the N electrode terminal N are connected with microphone signal lines M1 and M2. In this case, the microphone signal lines M1 and M2 include a first microphone signal line M1 connecting the first microphone input terminal MIC_P with the P electrode terminal P, and a second microphone input terminal M2 connecting the second microphone input terminal MIC_N with the N electrode terminal N, and which is spaced apart from the first microphone signal line M1 by a predetermined distance. Here, while the RF communication unit 100 is activated, a noise from the RF communication unit 110 may be induced in the microphone signal lines M1 and M2.

The noise collecting circuit 131 is disposed at a region adjacent to the microphone signal lines M1 and M2 and the microphone, and collects a noise signal similar to or identical with the noise signal induced in the microphone signal lines M1 and M2. The noise collecting circuit 131 may be disposed at a region adjacent to the microphone signal lines M1 and M2, and may be configured by an element having impedance similar to the impedance of the microphone. That is, as illustrated in FIG. 3, the noise collecting circuit 131 may include a noise collection signal line L disposed in parallel with the microphone signal lines M1 and M2, and a resistor R connected to an end of the noise collection signal line L1. Here, the size of the resistor R may correspond with physical characteristics of the microphone, namely, characteristics similar to the impedance thereof. Further, the noise collection signal line L may have a length and a thickness similar to that of the microphone signal lines M1 and M2. More particularly, the noise collection signal line L may be disposed between the first microphone signal line M1 and the second microphone signal line M2. In an exemplary implementation, the noise collection signal line L may be disposed between an interval center between the first microphone signal line M1 and the second microphone signal line M2. Accordingly, a noise identical with or similar to a noise of the RF communication unit 110 induced in the first microphone signal line M1 and the second microphone signal line M2 may be induced in the noise collection signal line L. The noise inducted in the noise collecting circuit 131 may be provided to the controller 160 through a noise input terminal MIC_NO of the controller 160.

The display unit 140 displays information input by the user or information provided to the user as well as various menus of the portable terminal 100. That is, the display unit 140 may provide various screens according to utilization of the portable terminal 100, for example, an idle screen, a menu screen, a message creation screen, a call screen, a portable terminal termination screen, a portable terminal booting screen, and the like. The display unit 140 may be configured in the form of a flat panel display such as a Liquid Crystal Display (LCD) or an Organic Light Emitting Diode (OLED). The display unit 140 may be manufactured by a structure including a display panel and a touch panel according to a manufacturing form. In the meantime, the display unit may output a display regarding the setting of a microphone noise removal mode. For example, in a case where the microphone noise removal mode is set such that, when a certain user function is activated, the RF communication unit 110 is activated, the display unit 140 may output an icon or an indicator for setting the microphone noise removal mode at a side of a screen according to the setting of a microphone noise removal mode. The icon or the indicator for setting the microphone noise removal mode may be removed from a screen according to an instruction of inactivation of the microphone noise removal mode.

The memory 150 stores a screen image to be output on the display unit 140 as well as an application program necessary for a function operation. Further, when the display unit 140 is configured by a touch screen, the memory 150 may store a key map or a menu map, and a touch lock part release region for operating the touch screen. Here, the key map or the menu map may have any of various forms. That is, the key map may have a key board map, a 3*4 key map, a QWERTY key map, or a control key map for controlling an operation of a currently activated application program. Further, the menu map may become a menu map for controlling an operation of a currently activated application program. The memory 150 may chiefly include a program area and a data area.

The program area may store an Operating System (OS) for booting the portable terminal 100 and for operating the foregoing structural elements, and an application program for supporting various user functions, for example, a user function for supporting a call function of the portable terminal 100, a web browser for accessing an Internet server, an MP3 user function for playing a source sound, an image output function for playing photographs, a moving image playing function, and the like. More particularly, the program area may store a program for operating a call function based on the RF communication unit 110. When operating a call function, the program area may store a microphone noise removal program selectively activated for removing a microphone noise. The microphone noise removal program may include a microphone noise collecting routine, a compensation signal generation routine corresponding to a microphone noise, and a removal routine for removing a noise with a compensation signal. The microphone noise collecting routine is a routine for collecting a noise signal induced in the noise collecting circuit 131, and the compensation signal generation routine is a routine for generating a compensation signal pattern capable of removing a noise signal induced in a microphone signal, for inverting a phase of a collected noise signal, and for selectively correcting a scale to generate a compensation signal. The removal routine may become a routine that provides a compensation signal whose phase is inverted in a microphone signal with the noise signal to remove a noise component of the microphone signal or that provides the compensation signal pattern to the microphone signal to remove a predetermined part of the noise signal. Here, when a construction for removing a microphone noise is configured by hardware, the microphone noise removal program may be omitted. This will be described in more detail below.

The data area stores data created according to use of the portable terminal 100. The data area may store phone-book data, and at least one icon and various contents according to a widget function. More particularly, the data area may temporarily store a compensation signal created by the microphone noise removal program, and the stored compensation signal may be provided in a procedure for removing a noise.

The controller 160 controls power supplied to respective elements to perform an initializing procedure of the respective elements. Further, the controller 160 may control respective structural elements of the portable terminal 100 such that a procedure for removing a microphone noise is performed. In more detail, if an input signal for performing a call function from an input unit 120 or a display unit 140 of a touch screen function is generated, the controller 160 may control formation of a communication channel based on the RF communication unit 110 for supporting the call function. Simultaneously, the controller 160 may control a microphone for collecting an audio signal to be activated. In this case, the controller 160 may control a microphone noise removal mode for removing a noise signal from an audio signal collected by the microphone to be activated at a constant condition, for example, when the RF communication unit 110 is activated or by default. Here, when the microphone noise is removed by a previously arranged circuit, the controller 160 may remove an audio signal collected by the microphone as a default without setting the microphone noise removal mode.

The controller 160 may collect a noise signal from the noise collecting circuit 131 disposed neighboring the microphone, and generate a compensation signal for removing a noise included in the microphone signal based on the collected noise signal. In this case, the controller 160 may invert a phase of the noise signal collected by the noise collecting circuit 131 to generate a compensation signal. Further, the controller 160 may perform scaling of the noise signal collected by the noise collecting circuit 131 with a constant ratio, and generate a compensation signal performing phase inversion. As illustrated above, the controller 160 may generate a compensation signal of a previously defined constant pattern corresponding to the noise signal.

If the compensation signal is generated, the controller 160 controls such that the generated compensation signal is applied to the audio signal collected by the microphone to remove the noise signal. Further, the controller 160 may process the audio signal from which the noise is removed, and control such that the processed result is transmitted to the other terminal through the RF communication unit 110.

As illustrated previously, the controller 160 collects a noise similar to the noise in the microphone using a noise collecting circuit 131, generates a compensation signal for removing a corresponding noise, and removes the noise induced in the microphone based thereon. Further, the controller 160 may be provided with a signal processor to process the generation of the compensation signal, and removes a microphone noise through element disposal for generating a separate compensation signal. This will be explained in more detail with reference to the accompanying drawings.

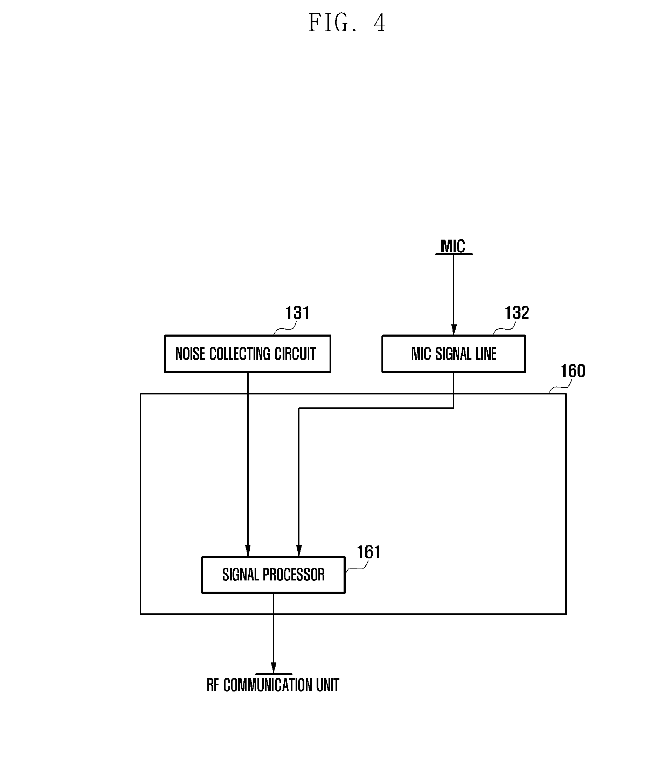

FIG. 4 is a block diagram illustrating a configuration of a controller for removing a microphone noise according to an exemplary embodiment of the present invention.

Referring to FIG. 4, the controller 160 includes a signal processor 161. The controller 160 having a construction mentioned above may be configured such that a noise collected by the noise collecting circuit 131 is provided to the signal processor 161 and a noise induced in microphone signal lines M1 and M2 is transferred to the signal processor 161.

The signal processor 161 generates a compensation signal based on a noise provided from the noise collecting circuit 131. In this procedure, the signal processor 161 may adjust a gain of a noise provided from the noise collecting circuit 131, for example, scale the noise with a constant ratio and invert a phase to generate a compensation signal. The scaling ratio may be determined using a signal amplitude of a sampled section as a reference after sampling a constant section of a microphone signal provided through microphone signal lines M1 and M2 or may be previously determined with a constant ratio through various experiments. Because a communication environment is changed at any time according to a location and a used form of the terminal, the scaling application may be repeated with a constant period or in real time. A scaling ratio applied may be the same or be changed.

Further, the signal processor 161 may invert a phase of a received noise without a separate scaling procedure to generate a compensation signal. To do this, the noise collecting circuit 131 may be provided to collect a noise similar to a noise induced in microphone signal lines M1 and M2. Further, the signal processor 161 may read out one compensation signal among a plurality of compensation signal samples corresponding to a noise collected by the noise collecting circuit 131 from the memory 150 and use the read compensation signal as a compensation signal of a current collected noise. So as to use a compensation signal sample, each time a compensation signal corresponding to a noise provided from the noise collecting circuit 131 is generated, the signal processor 161 may store a corresponding compensation signal in the memory 150 as the compensation signal sample. If a noise signal is transferred to the noise collecting circuit 131, the signal processor 161 may refer to a compensation signal corresponding to the noise signal from the memory 150.

If the compensation signal is provided, the signal processor 161 applies the compensation signal to a microphone signal provided from the microphone signal lines M1 and M2 to remove the noise signal included in the microphone signal. For example, the signal processor 161 adds the compensation signal to the microphone signal using an adder to remove a noise component of the microphone signal. The microphone signal from which the noise component is removed may be processed in a form to be transmitted to another terminal through the RF communication unit 110.

As illustrated previously, a controller 160 for removing a microphone noise according to a first exemplary embodiment of the present invention provides a compensation signal for removing a noise collected by the noise collecting circuit 131 using the signal processor 161, and removes a noise component of the microphone signal based thereon to improve the quality of an audio signal collected by a microphone without arranging a separate circuit. Here, the signal processor 161 may set a microphone noise removal mode according to the user request, and may not support a separate removal function for removing a microphone noise according to the presence of a mode setting or reducing power consumption. For example, when the remaining battery capacity is less than a predetermined value, the signal processor 161 may automatically convert the microphone noise removal mode into an inactivation state to suppress power consumption. Further, in a case where the remaining battery capacity is equal to or greater than the predetermined value, the signal processor 161 may control automatically or according to a user confirmation such that a microphone noise removal mode is activated according to user selection automatically or after display of a pop-up.

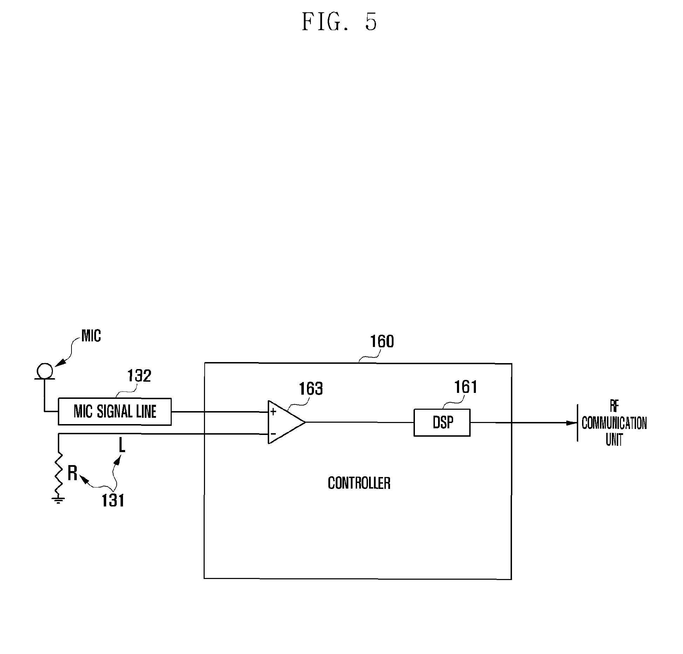

FIG. 5 is a block diagram illustrating a configuration of a controller according to a second exemplary embodiment of the present invention.

Referring to FIG. 5, a controller 160 may include a compensator 163 connected to a noise collecting circuit 131 and microphone signal lines M1 and M2 (shown as 132), and a Digital Signal Processor (DSP) 161 connected to the compensator 163.

Here, the noise collecting circuit 131 is disposed at a neighboring region of the microphone signal lines M1 and M2. The noise collecting circuit 131 may be provided in a form having a signal line with a length similar to a thickness and length of the microphone signal lines M1 and M2, and a resistor with impedance similar to that of the microphone. Because the noise collecting circuit 131 is disposed at a neighboring region of the microphone signal lines M1 and M2, a noise induced in the microphone signal lines M1 and M2 may be induced in the same manner as in the noise collecting circuit 131. The noise induced in the microphone signal lines M1 and M2 is provided to a first input terminal (+) of the compensator 163 together with an audio signal collected by the microphone. Moreover, the noise induced in the noise collecting circuit 131 is provided to a second input terminal (-) of the compensator 163.

The compensator 163 has a first input terminal (+) and a second input terminal (-), sums a signal input to the first input terminal (+) and a signal input to the second input terminal (-), and provides a summing result to the signal processor 161. The compensator 163 may be implemented in the form of an OP-AMP, and a reference voltage may be provided thereto according to the intention of a designer. More particularly, the compensator 163 inverts a phase of an input signal input to the second input terminal (-), and sums the inverted signal and the signal input to the first input terminal (+). Further, the compensator 163 may transfer a summing result of the signal input to the first input terminal (+) and an inverted signal of the signal input to the second input terminal (-) to the signal processor 161. As a result, the compensator 163 may invert a phase of a signal provided from the noise collecting circuit 131, sum the inverted signal and a microphone signal, and provide the summing result to the signal processor 161. Accordingly, a phase of a noise signal of a noise collecting circuit 131 having a form similar to that of a noise signal induced in microphone signal lines M1 and M2 is inverted, and the inverted signal is summed with a microphone signal to remove a noise included in the microphone signal.

The signal processor 161 may process a signal provided from the compensator 163 in a form capable of being transmitted to another terminal through the RF communication unit 110. The signal processor 161 may transfer the processed signal result to the RF communication unit 110.

As illustrated previously, in a controller 160 supporting removal of a microphone noise, the compensator 163 is provided by hardware such that a load of the signal processor 161 is reduced and the noise is rapidly compensated, thereby improving voice quality of an audio signal collected by the microphone. In a controller 160 for removing a microphone noise of a compensator 163 form, a noise collecting circuit 131 may be connected to the compensator 163 regardless of the presence of setting a separate microphone noise removal mode to provide a microphone noise removal function.

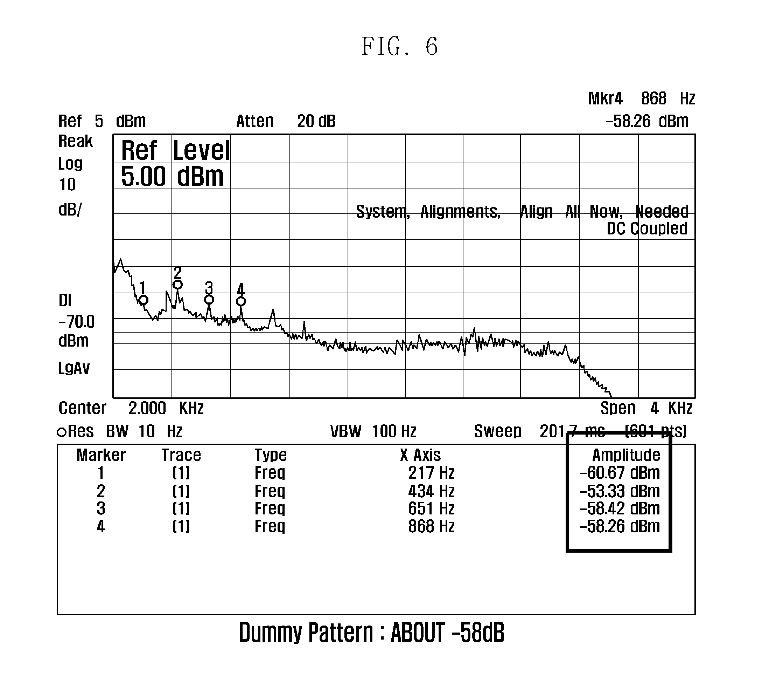

FIG. 6 to FIG. 15 are views illustrating experimental results with respect to removal of a noise based on a portable terminal according to an exemplary embodiment of the present invention.

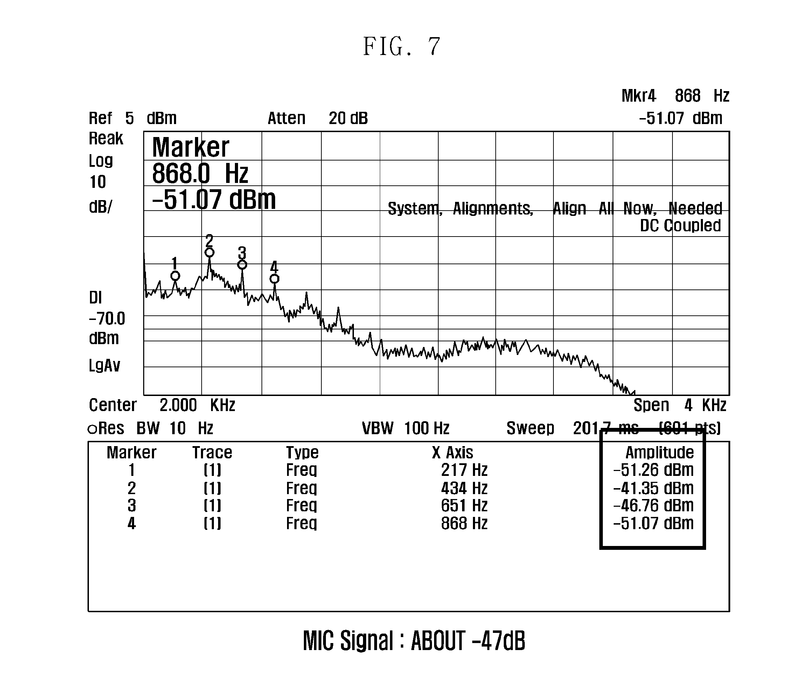

FIG. 6 is a graph illustrating a result of measuring a noise induced in a noise collecting circuit according to an exemplary embodiment of the present invention. FIG. 7 is a graph illustrating a result of measuring a noise induced in a microphone signal line according to an exemplary embodiment of the present invention.

Referring to FIGs. 6 and 7, a TDMA noise induced in the noise collecting circuit 131 is about -58dB, and a noise induced in the microphone MIC is about -47dB.

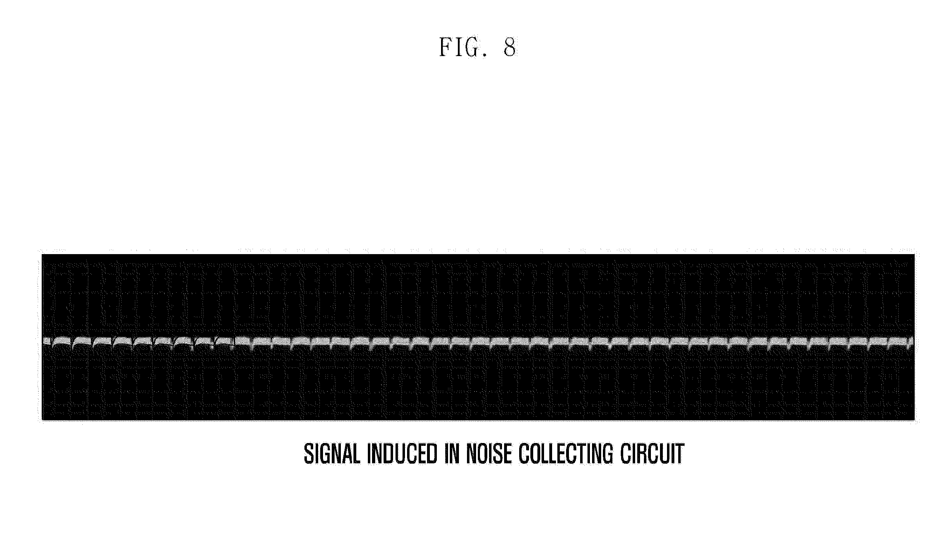

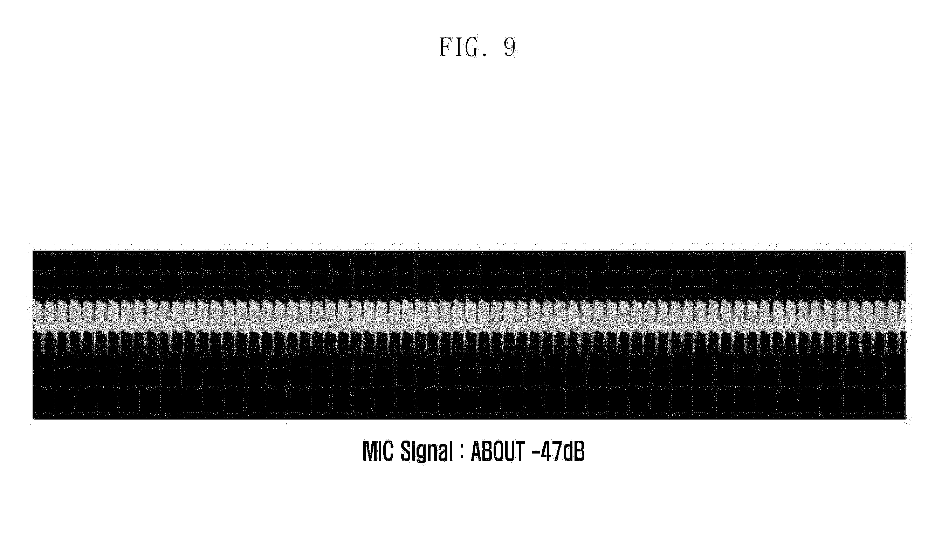

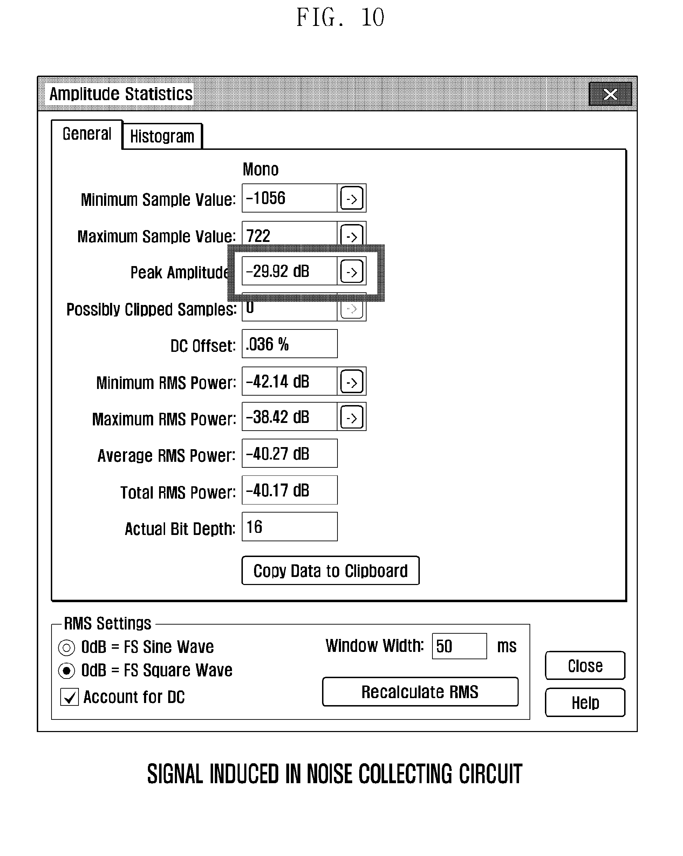

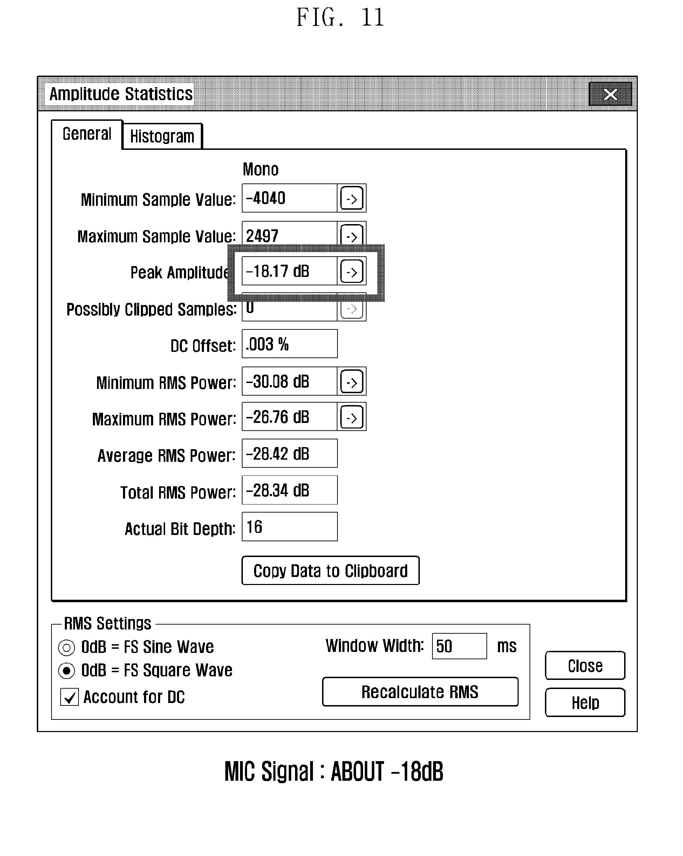

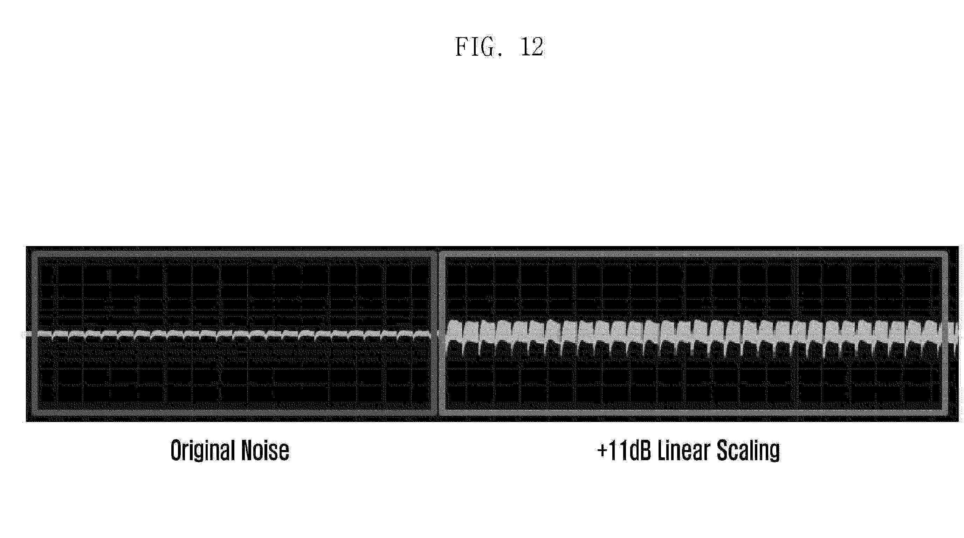

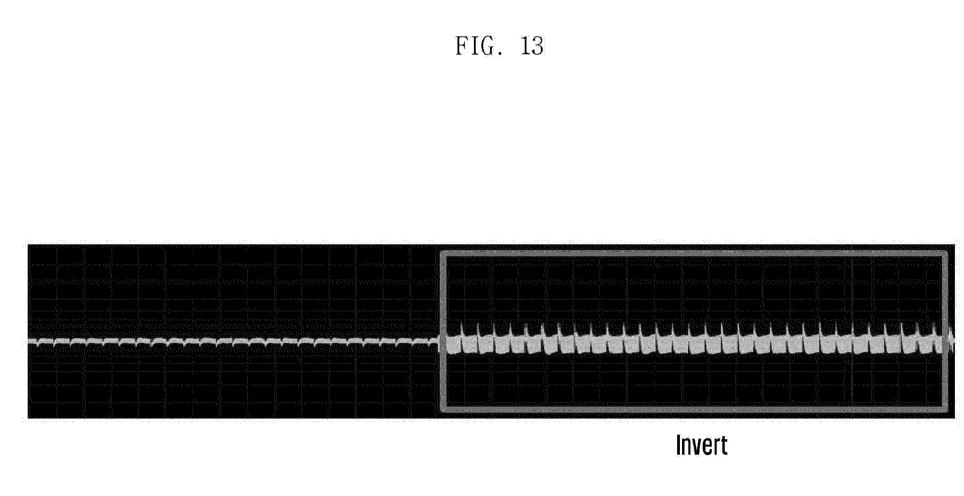

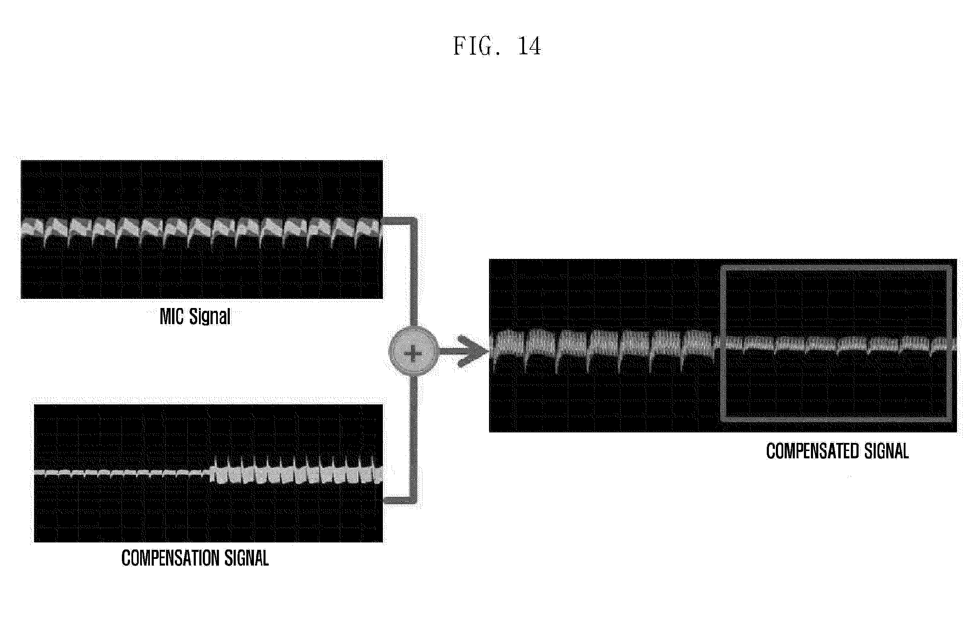

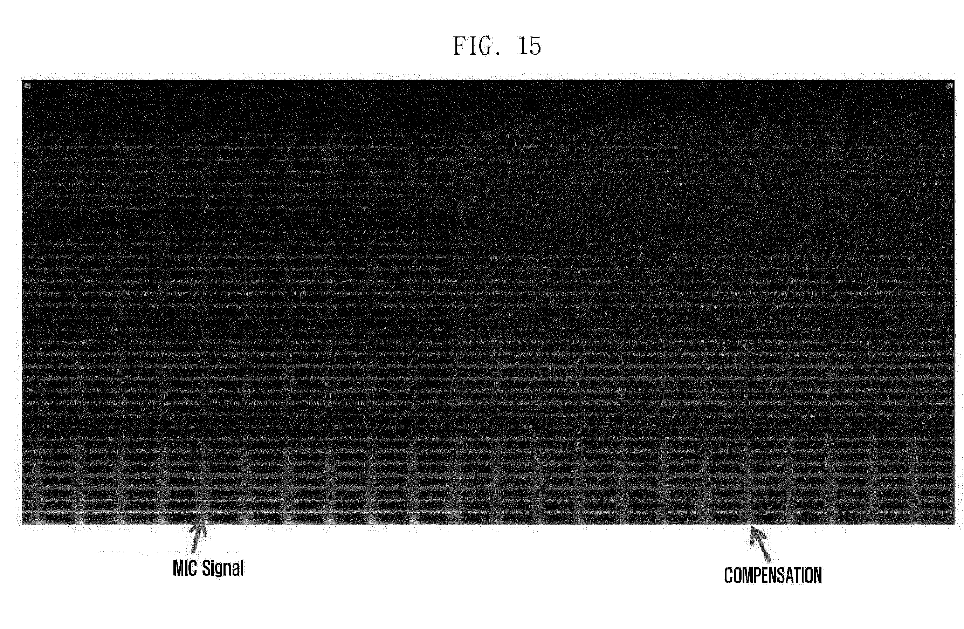

FIG. 8 is a waveform diagram of a recording of a noise induced in a noise collecting circuit according to an exemplary embodiment of the present invention. More specifically, FIG. 8 illustrates a TDMA noise induced in the noise collecting circuit 131 to compare a waveform. FIG. 9 is a waveform diagram of a recording of a noise induced in a microphone signal line according to an exemplary embodiment of the present invention. More specifically, FIG. 9 illustrates a TDMA noise induced in the microphone to compare a waveform. FIG. 10 is a view illustrating a result of normalizing a recorded noise associated with a noise collecting circuit according to an exemplary embodiment of the present invention. More specifically, FIG. 10 is a view illustrating a result that normalizes a recorded noise related to a noise collecting circuit 131. FIG. 11 is a view illustrating a result of normalizing a recorded noise associated with a microphone signal line according to an exemplary embodiment of the present invention. More specifically, FIG. 11 illustrates a result that normalizes the recorded noise with -0dB Max associated with the microphone MIC. FIG. 12 is a waveform diagram illustrating a scaling signal for generating a compensation signal according to an exemplary embodiment of the present invention. More specifically, FIG. 12 is a view illustrating an original form of a noise induced in a noise collecting circuit 131 and a partial region scaled to -11dB for noise scaling. As shown, a part of the noise is scaled such that a part of amplitude is largely formed. FIG. 13 is a waveform diagram illustrating an inverted signal of a scaling signal for generating a compensation signal according to an exemplary embodiment of the present invention. More specifically, FIG. 13 is a view illustrating a compensation signal inverting a corresponding signal to apply an opposite phase of a scaled signal of -11dB in FIG. 12. FIG. 14 is a view illustrating noise removal through a sum of a microphone signal and a compensation signal according to an exemplary embodiment of the present invention. More specifically, FIG. 14 is a view illustrating a procedure that sums a compensation signal that is scaled with -11dB and with an inverted phase and the microphone signal to remove a noise included in the microphone signal. As illustrated in FIG. 14, it may be appreciated that a noise signal is removed through a summing procedure between a section defined by a compensation signal and a microphone signal. FIG. 15 is a spectrum analysis result of a signal from which a noise is removed and an original signal according to an exemplary embodiment of the present invention. As shown in FIG. 15, it may be appreciated that a frequency characteristic of a microphone signal from which a noise is removed is improved in comparison with an original microphone signal.

The foregoing portable terminal 100 may further include various additional modules. For example, when the portable terminal 100 is a communication terminal, it may include structural elements that are not mentioned such as a near field communication module for near field communication, an interface exchanging data in a wired communication scheme or a wireless communication scheme of the portable terminal 100, an Internet communication module communicating with an Internet to perform an Internet function, a digital broadcasting module receiving and broadcasting digital broadcasting, and the like. Since the structural elements can be variously changed according to the convergence trend of a digital device, an exhaustive list cannot be provided. However, the portable terminal 100 may include structural elements equivalent to the foregoing structural elements. Further, the portable terminal 100 may be substituted by specific constructions in the foregoing arrangements according to the provided form or another structure. This can be easily understood to those skilled in the present art.

Further, the portable terminal 100 according to exemplary embodiments of the present invention may include any kind of device for collecting audio signals by using a microphone. For example, the portable terminal 100 may include an information communication device and a multimedia device such as a Portable Multimedia Player (PMP), a digital broadcasting player, a Personal Digital Assistant (PDA), a music player (e.g., MP3 player), a portable game terminal, a Smart Phone, a notebook computer, and a handheld PC as well as various mobile communication terminals corresponding to various communication systems

As illustrated above, in a method of removing a microphone noise and a portable terminal supporting the same according to exemplary embodiments of the present invention, a noise included in a microphone signal may be removed to provide excellent call quality.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of removing a microphone noise, the method comprising:
collecting a microphone signal through a microphone signal line connected to a microphone;
collecting a noise signal induced in a noise collecting circuit disposed at a neighboring region of a microphone signal line provided between the microphone and a controller;
generating a compensation signal for removing a noise included in the microphone signal using the noise signal; and
removing the noise included in the microphone signal with the compensation signal.

2. The method of claim 1, wherein the generating of the compensation signal comprises one of:
inverting a phase of the noise signal to generate a compensation signal; and
inverting a phase of a scaled noise signal to generate a compensation signal after scaling the noise signal with a predetermined size.

3. The method of claim 1, wherein the generating of the compensation signal comprises:
collecting a previously stored compensation pattern for removing the noise signal; and
determining the collected compensation pattern as the compensation signal.

4. The method of claim 1, wherein the removing of the noise comprises summing the compensation signal of the collected noise having an inverted phase and the microphone signal to remove a noise included in the microphone signal.

5. The method of claim 1, wherein the removing of the noise comprises:
inputting the collected noise signal to a terminal of a compensator;
inputting the microphone signal to another terminal of the compensator; and
summing the noise signal input to the compensator and the microphone signal to remove a noise of the noise signal.

6. The method of claim 1, further comprising:
inactivating a microphone noise removal mode when a remaining capacity of a battery is less than or equal to a preset value after determining the remaining capacity of the battery; and
activating the microphone noise removal mode when the remaining capacity of the battery is equal to or greater than a preset value and a microphone noise removal mode is inactivated after the determining of the remaining capacity of the battery.

7. The method of claim 1, further comprising:
forming a communication channel based on a radio frequency communication unit; and
activating a microphone noise removal mode for removing the microphone noise when the call channel is formed.

8. A portable terminal supporting removal of a microphone noise, the terminal comprising:
a microphone for collecting an audio signal;
a controller for processing the audio signal collected by the microphone;
a microphone signal line for transferring a microphone signal collected by the microphone to the controller; and
a noise collecting circuit disposed at a neighboring region of the microphone signal line for collecting and providing a noise signal similar to a noise induced in the microphone signal line to the controller,
wherein the controller controls in such a manner that the noise induced in the microphone signal line is removed based on the noise signal collected by the noise collecting circuit.

9. The portable terminal of claim 8, wherein the microphone signal line comprises:
a first microphone signal line connecting a P terminal of the microphone to the controller; and
a second microphone signal line connecting an N terminal of the microphone to the controller.

10. The portable terminal of claim 9, wherein the noise collecting circuit comprises:
a noise collecting signal line disposed between the first microphone signal line and the second microphone signal line, and including a terminal connected to the controller; and
a resistor connected to another terminal of the noise collecting signal line and having a physical characteristic similar to that of the microphone connected to the microphone signal line.

11. The portable terminal of claim 8, wherein the controller comprises a signal processor for generating a compensation signal based on the collected noise signal and for removing a noise included in the microphone signal based on the generated compensation signal.

12. The portable terminal of claim 11, wherein the signal processor generates at least one of:
a compensation signal generated by inverting a phase of the noise signal;
a compensation signal generated by scaling the noise signal with a predetermined size and inverting a phase of the scaled noise signal; and
a compensation signal generated based on a previously stored compensation pattern to remove the noise signal.

13. The portable terminal of claim 8, wherein the controller controls to perform one of:
determining a remaining capacity of a battery, and control such that a removal mode for removing the microphone noise is inactivated when the remaining capacity of the battery is less than or equal to a preset value; and
determining the remaining capacity of the battery, and control such that the removal mode for removing the microphone noise is activated when the remaining capacity of the battery is equal to or greater than a preset value and the removal mode removing a microphone noise is inactivated.

14. The portable terminal of claim 8, further comprising a radio frequency communication unit supporting formation of a communication channel,
wherein the controller controls such that a microphone noise removal mode for removing the microphone noise is activated when the call channel is formed.

15. The portable terminal of claim 8, wherein the controller comprises:
a compensator, including a first input terminal to which the microphone signal is input, and a second input terminal to which the collected noise signal is input, for inverting a phase of the noise signal, and for summing the input microphone signal and the inverted noise signal; and
a signal processor for processing an output signal of the compensator.
